# EUROPEAN PATENT APPLICATION

(11) **EP 4 636 754 A1**
(43) Date of publication of application: **22.10.2025**
(21) Application number: 24170314.9
(22) Date of filing: 15.04.2024
(51) Int. Cl.: G10H 1/00, G10H 1/36, H04S 3/00

(54) **OBJECTIFICATION OF AUDIO SIGNALS**

(71) Applicant: Bang & Olufsen A/S, 7600 Struer (DK)
(72) Inventor: KAPLANIS, Neo, Welwyn Garden City, AI7 4ER (GB); SCHEUREGGER, Oliver, 2500 Valby (DK); LLUIS SALVADO, Francesc, 2920 Charlottenlund (DK)
(74) Representative: D Young & Co LLP

(57) **Abstract**

Techniques for dynamic audio objectification are described. Embodiments include providing a first audio snippet from an audio signal to a machine learning model trained based on audio snippets labeled with an audio source and receiving, from the machine learning model, a subset of the first audio snippet that is associated with the audio source. Embodiments include, after playing the reconstituted first audio snippet, receiving a changed configuration relating to the audio source. Embodiments include providing a second audio snippet from the audio signal to the machine learning model and receiving, from the machine learning model, a subset of the second audio snippet that is associated with the audio source. Embodiments include playing a reconstituted second audio snippet based on the subset of the second audio snippet and the changed configuration, wherein an audibly perceptible parameter of the audio source is changed in the reconstituted second audio snippet.

## Description

### FIELD

The present disclosure generally relates to audio processing techniques, and more specifically, to techniques for extracting individual sound sources from audio signals and manipulating (e.g., spatializing, removing, and/or otherwise modifying) the extracted individual sound sources.

### BACKGROUND

Today, many audio files are created in such a manner that individual audio signals corresponding to different audio sources (e.g., instruments) are able to be independently manipulated. For example, object-based audio delivers discrete audio "objects" corresponding to different audio sources. The advantage of this is that manipulation of discrete sound sources within the audio product is easy. For example, altering the level of the vocals can be done by operating on the discrete vocal audio stream and without distorting the other elements of the audio mix. Another example is that discrete audio objects can be routed to various available reproduction devices in a way that is flexible and interactive. However, most audio is produced such that audio sources are mixed together into one or more audio signals, known as channel-based audio. Furthermore, even if object-based audio is produced, upon decoding at the consumer side, the discrete audio objects are often mixed into a channel-based format before the user would have access to them. For example, legacy audio content may be channel-based, rather than object-based, such as including audio signals corresponding to particular channels (e.g., mono, stereo, surround, and/or the like). Additionally, many such channel-based or otherwise non-object-based audio files are still being created.

Converting non-object-based audio content into an object-based form is a laborious and expensive process, and cannot be performed in many cases, such as without the involvement of an expert in advanced audio processing and conversion.

### SUMMARY

Particular aspects are set out in the appended independent claims. Various optional embodiments are set out in the dependent claims.

Various examples of the presently taught approached may provide for conversion of non-object-based audio content into object-based audio content and/or otherwise enabling separate manipulation of individual audio sources within audio data.

One embodiment described herein is a method performed by a computing device. The computer-implemented method includes: providing a first audio snippet from an audio signal to a machine learning model that has been trained through a supervised learning process based on audio snippets labeled with a particular audio source; receiving, from the machine learning model in response to the first audio snippet, a subset of the first audio snippet that is associated with the particular audio source; playing, via one or more speakers, a reconstituted first audio snippet based on the subset of the first audio snippet; after the playing of the reconstituted first audio snippet, receiving a changed configuration relating to the particular audio source for the audio signal; providing a second audio snippet from the audio signal to the machine learning model; receiving, from the machine learning model in response to the second audio snippet, a subset of the second audio snippet that is associated with the particular audio source; and playing, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

Another embodiment described herein is a computing device. The computing device includes a processor and a memory. The memory stores instructions, which when executed on the processor perform an operation. The operation includes: providing a first audio snippet from an audio signal to a machine learning model that has been trained through a supervised learning process based on audio snippets labeled with a particular audio source; receiving, from the machine learning model in response to the first audio snippet, a subset of the first audio snippet that is associated with the particular audio source; playing, via one or more speakers, a reconstituted first audio snippet based on the subset of the first audio snippet; after the playing of the reconstituted first audio snippet, receiving a changed configuration relating to the particular audio source for the audio signal; providing a second audio snippet from the audio signal to the machine learning model; receiving, from the machine learning model in response to the second audio snippet, a subset of the second audio snippet that is associated with the particular audio source; and playing, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

Another embodiment described herein is a computer-readable medium. The computer-readable medium includes computer executable code, which when executed by one or more processors, performs an operation. The operation includes: providing a first audio snippet from an audio signal to a machine learning model that has been trained through a supervised learning process based on audio snippets labeled with a particular audio source; receiving, from the machine learning model in response to the first audio snippet, a subset of the first audio snippet that is associated with the particular audio source; playing, via one or more speakers, a reconstituted first audio snippet based on the subset of the first audio snippet; after the playing of the reconstituted first audio snippet, receiving a changed configuration relating to the particular audio source for the audio signal; providing a second audio snippet from the audio signal to the machine learning model; receiving, from the machine learning model in response to the second audio snippet, a subset of the second audio snippet that is associated with the particular audio source; and playing, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

The following description and the appended figures set forth certain features for purposes of illustration.

### BRIEF DESCRIPTION OF DRAWINGS

Various embodiments in accordance with the present disclosure will be described with reference to the drawings, where like designations denote like elements. Note that the appended drawings illustrate typical embodiments and are therefore not to be considered limiting; other equally effective embodiments are contemplated.
**FIG. 1** illustrates an example workflow for dynamic audio objectification and spatialization, according to one embodiment.
**FIG. 2** illustrates example configurations related to dynamic audio objectification and spatialization, according to one embodiment.
**FIG. 3** illustrates an example user interface related to dynamic audio objectification and spatialization, according to one embodiment.
**FIG. 4** is a flowchart of a method for dynamic audio objectification and spatialization, according to one embodiment.
**FIG. 5** is a block diagram of an example computing system related to dynamic audio objectification and spatialization, according to one embodiment.

### DETAILED DESCRIPTION

Embodiments described herein provide techniques for dynamic objectification and targeted manipulation of audio content using a combination of signal processing and machine learning techniques. More specifically, embodiments provide techniques for using one or more machine learning models to extract individual audio sources from an audio signal in real-time or near real-time in order to enable independent manipulation of each individual audio source, such as spatially.

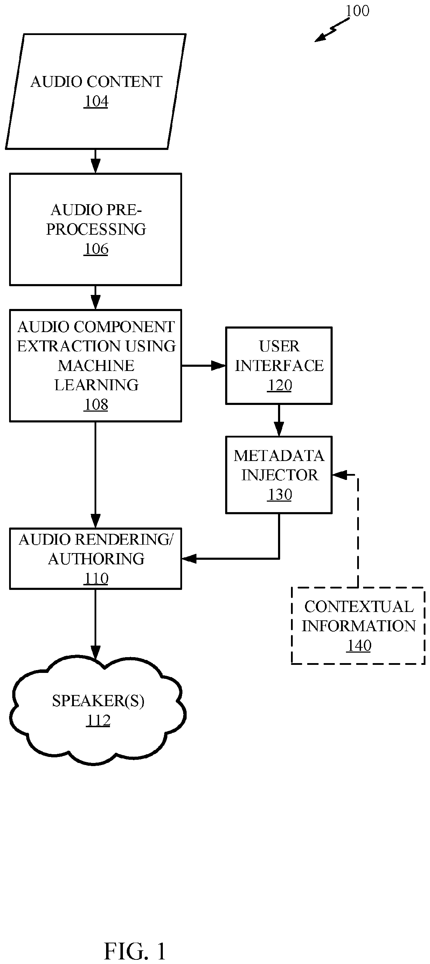

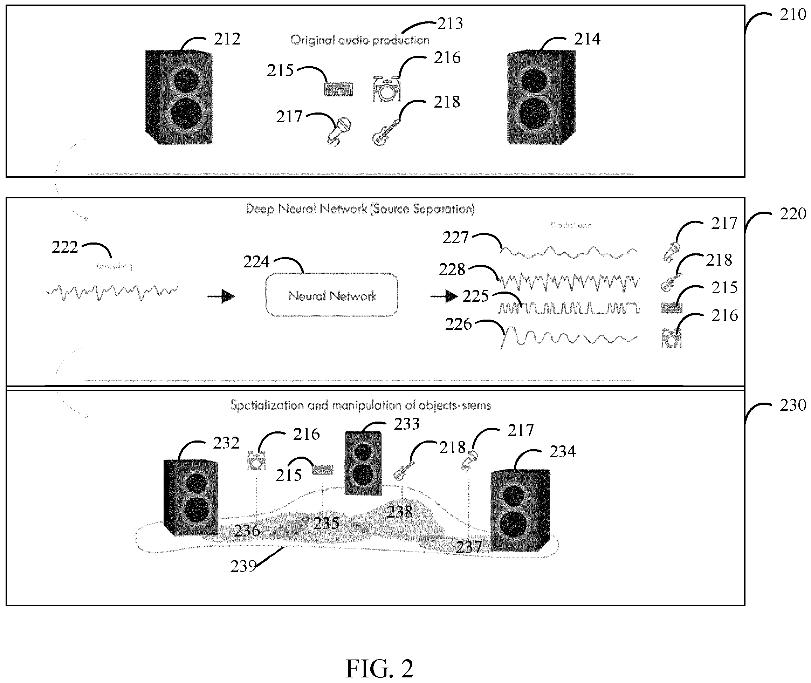

According to certain embodiments, an audio signal may be a channel-based audio signal and/or otherwise may not be an object-based audio signal. For example, the audio signal may be a conventional or legacy audio signal that is organized into one or more channels (e.g., mono, stereo, surround, or the like). Techniques described herein involve training a machine learning model, such as a deep neural network, to accept such an audio signal as an input and, in response, to output a portion of the audio signal that corresponds to a particular audio source such as a particular instrument, a particular type of animal, and/or the like. The machine learning model may be trained in such a manner that the trained machine learning model enables real-time or near real-time extraction of a particular audio source based on training data that includes short audio snippets (e.g., approximately 100 milliseconds or less) labeled with an indication of the particular audio source. Different machine learning models may be trained to perform such extraction for different audio sources (e.g., guitar, vocals, keyboard, bass, drums, and/or the like). Training and use of such machine learning models are described in more detail below with respect to **FIGs. 1** and **2****.** As used herein, the term audio snippet may refer to a segment of audio data that is shorter in length than a longer audio signal of which the audio snippet is a subset.

Once trained, one or more such machine learning models may be used to automatically extract one or more separate audio sources from an audio signal, and these audio sources may then be individually controlled. For example, one audio source extracted from an audio signal may correspond to a particular instrument, and that particular instrument may be spatially moved within the overall audio signal so that the particular instrument is audibly perceived to be located in a different position relative to the listener than the particular instrument was audibly perceived to be located prior to the spatial move. Such manipulation of individual audio sources extracted using machine learning techniques is described in more detail below with respect to **FIGs. 1-3****.** Accordingly, a user may be enabled to dynamically control the audibly perceived position, volume, and/or other attributes of individual "objects" (e.g., audio sources) within an audio signal in real-time or near real-time, even when the audio signal is not natively configured in an object-based manner. The dynamic manipulation is to be observed by a user as real-time; the perceived experience by a user may include multimodal dependencies that may modulate by the use case and application. It is noted that, as used herein, a real-time activity generally refers to something that occurs within a time period of five milliseconds or less, while a near real-time activity generally refers to something that occurs within a time period of one hundred milliseconds or less, although it is to be understood that these are given as examples of time periods.

Embodiments described herein provide various technical improvements with respect to conventional techniques for processing and playing audio content. For example, by training machine learning models through supervised learning using short audio snippets labeled (e.g., associated in the training data) with particular audio sources, techniques described herein allow such machine learning models to be used to extract portions of an audio signal corresponding to particular audio sources in real-time or near real-time so that the individual audio sources can be separately manipulated. While existing techniques generally involve initially creating an audio signal in an object-based manner or manually remixing an audio signal through a complex and expensive process to separate the audio signal into separate objects, techniques described herein allow a non-object-based audio signal to be automatically separated into individual objects in an accurate and efficient manner, such as while the audio is playing, immediately prior to playing the audio, and/or while a user is providing input with respect to the audio signal. Thus, aspects of the present disclosure enable a user to dynamically control separate audio sources within an audio signal, such as changing audibly perceived spatial positions of such audio sources, volume levels of such audio sources, and/or the like, in real-time or near real-time (e.g., even for audio that is being streamed live and/or otherwise is not an object-based audio signal). Embodiments described herein, therefore, enable a computer to do what it could not do before by allowing a computer to automatically separate audio sources within an audio signal in real-time or near real-time.

Furthermore, even if object-based audio has been produced and delivered to a consumer using existing techniques, to provide compatibility with such object-based audio using those existing techniques the equipment manufacturer must implement object-based decoders and integrate the systems necessary to enable interaction from the user in order for such object-based audio to be usable. Accordingly, in existing techniques, object-based audio is simply decoded to a channel-based representation due to lack of post-processing support for objects. However, embodiments described herein overcome these challenges by allowing even audio that is decoded in a channel-based manner to be accurately and efficiently separated into multiple portions corresponding to separate audio sources that can be independently manipulated in real-time or near real-time.

**FIG. 1** illustrates an example workflow 100 for dynamic audio objectification and spatialization, according to one embodiment.

In workflow 100, audio content 104 is provided as input to an audio pre-processing 106 stage. Audio content 104 generally represents an audio signal comprising audio data. For example, audio content 104 may be a non-object-based audio signal, such as a channel-based audio signal that includes a plurality of audio sources (e.g., instruments) mixed together in one or more channels. Instruments are included as an example of an audio source, and other types of audio sources are possible with techniques described herein, such as particular types of animals, particular types of environmental sound (e.g., traffic, sirens, rain, etc.), and/or the like.

In certain embodiments, audio content 104 represents one or more audio snippets (e.g., segments of audio data that are shorter in length than a longer audio signal of which the audio snippets are a subset) that are received in succession, such as via a buffer of audio data.

Audio pre-processing 106 may generally involve preparing audio content 104 for use in providing inputs to a machine learning model. For example, during audio pre-processing 106, audio content 104 may be converted to a particular audio format and/or filtered in one or more ways, and/or one or more machine learning model input features may be determined based on audio content 104. In one example, audio pre-processing 106 involves taking a short snippet (e.g., one hundred milliseconds or less) from audio content 104.

After audio pre-processing 106, audio component extraction using machine learning 108 is performed. For example, audio component extraction using machine learning 108 may involve providing one or more inputs based on audio content 104 (e.g., determined at audio pre-processing 106) to one or more machine learning models trained to accept audio snippets as inputs and to output, in response, portions of the audio snippets that correspond to particular audio sources.

As explained in more detail below with respect to **FIG. 2****,** the machine learning model(s) may, for example, be neural networks such as deep neural networks, and may be trained using supervised learning techniques based on labeled training data.

Neural networks generally include a collection of connected units or nodes called artificial neurons. The operation of neural networks can be modeled as an iterative process. Each node has a particular value associated with it. In each iteration, each node updates its value based upon the values of the other nodes, the update operation typically consisting of a matrix-vector multiplication. In some cases, a neural network comprises one or more aggregation layers, such as a softmax layer. A shallow neural network generally includes only a small number of "hidden" layers between an input layer and an output layer. By contrast, a deep neural network (DNN) generally includes a larger number of hidden layers. In deep learning, a machine learning model may learn to perform classification tasks directly from input data such as images, text, or sound. Deep learning models are typically trained by using a large set of labeled data and neural network architectures that generally contain a large number layers.

In some embodiments, training of a machine learning model described herein is a supervised learning process that involves providing training inputs (e.g., audio snippets) as inputs to the machine learning model. The machine learning model processes the training inputs and generates outputs (e.g., portions of the audio snippets that may correspond to particular audio sources) based on the training inputs. The outputs are compared to known labels associated with the training inputs (e.g., labels manually applied to training data by experts indicating portions of the audio snippets that are known to correspond to particular audio sources) to determine the accuracy of the machine learning model, and parameters of the machine learning model are iteratively adjusted until one or more conditions are met. For instance, the one or more conditions may relate to an objective function (e.g., a cost function or loss function) for optimizing one or more variables (e.g., model accuracy). In some embodiments, the conditions may relate to whether the predictions produced by the machine learning model based on the training inputs match the known labels associated with the training inputs or whether a measure of error between training iterations is not decreasing or not decreasing more than a threshold amount. The conditions may also include whether a training iteration limit has been reached. Parameters adjusted during training may include, for example, hyperparameters, values related to numbers of iterations, weights, functions used by nodes to calculate scores, and the like. In some embodiments, validation and testing are also performed for a machine learning model, such as based on validation data and test data, as is known in the art.

In order to enable real-time or near real-time extraction of particular audio sources from audio signals, the training data used to train a machine learning model may include audio snippets that are less than a threshold amount of time in length. For example, a machine learning model may be trained using training data that includes audio snippets that are one hundred milliseconds or shorter in length, or fifty milliseconds or shorter in length. In some embodiments, a machine learning model is trained based on increasingly shorter audio snippets, such as starting with longer audio snippets and then moving to shorter audio snippets so that the machine learning model learns to predict the portions of an audio snippet that correspond to a particular audio source at an increasingly finer granularity. In one example implementation, a machine learning model is trained based on a first training data set including labeled audio snippets of a first length, then is trained based on a second training data set including labeled audio snippets of a second length that is shorter than the first length, and so on. Ultimately, the machine learning model may be trained based on training data including labeled audio snippets of a length below a "near real-time" threshold, such as one hundred milliseconds or fifty milliseconds, so that the machine learning model can accurately extract individual audio sources from audio snippets of such a length.

Separate machine learning models may be trained in a similar manner for extracting different audio sources from audio signals. For example, audio sources may correspond to instruments such as guitars, keyboards, bass, drums, vocals, and/or the like. In one embodiment, a first machine learning model is trained based on training data that includes audio snippets labeled with indications of portions of the audio snippets that include guitar sound, a second machine learning model is trained based on training data that includes audio snippets labeled with indications of portions of the audio snippets that include keyboard sound, a third machine learning model is trained based on training data that includes audio snippets labeled with indications of portions of the audio snippets that include drum sound, and a fourth machine learning model is trained based on training data that includes audio snippets labeled with indications of portions of the audio snippets that include vocal sound. The machine learning models may correspond to the same or different model types and/or architectures. In one example, the machine learning models are different instances of the same type and architecture of machine learning model.

According to certain embodiments, one or more machine learning models trained and used for techniques described herein are "lightweight" machine learning models having relatively small numbers of parameters and optimized for running locally on a user device and/or in an embedded system. In one example, each such machine learning model is a deep neural network (DNN) comprising lightweight recurrent modules with connected hidden states within multiple modules. While each machine learning model may be trained using labeled short audio snippets (e.g., one hundred milliseconds or less in length), such a machine learning model may also be trained using labeled longer audio snippets (e.g., longer than one hundred milliseconds, or even one or more seconds in length) so that the machine learning model effectively learns from longer audio context and can apply that knowledge to shorter audio snippets.

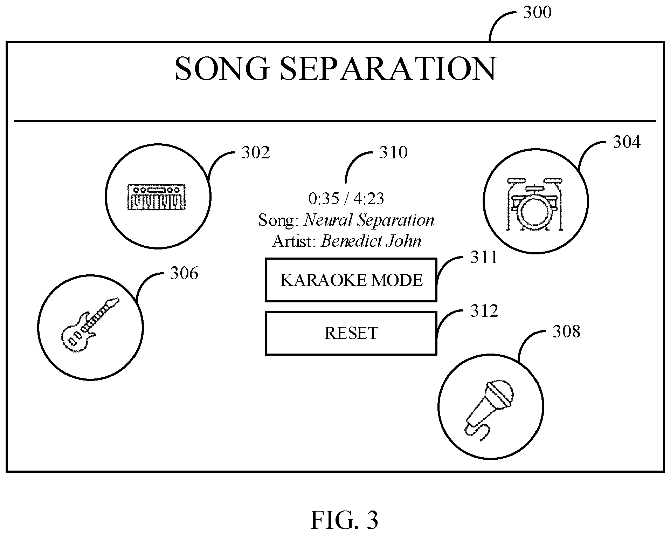

At audio component extraction using machine learning 108, one or more machine learning models may output one or more portions of audio content that correspond to one or more particular audio sources. These portions (e.g., components) may be used as individual "objects" that can be independently manipulated within the overall audio signal. For example, output may be provided to a user via a user interface 120 based on the objects extracted using machine learning. In one embodiment, described in more detail below with respect to **FIG. 3****,** user interface 120 may display visual representations of the different audio sources present in an audio signal (e.g., based on the extraction) and may enable a user to interact with one or more user interface controls to change attributes of the different audio sources, such as changing audibly perceptible spatial positions of the audio sources, changing volume levels of the individual audio sources, silencing individual audio sources, and/or the like.

Furthermore, output may be provided to an audio rendering/authoring 110 stage based on the objects extracted using machine learning. For example, audio rendering/authoring 110 may involve reconstituting an audio signal based on the individual objects and/or based on additional information such as user input and/or configuration information. In one embodiment, a metadata injector 130 generates metadata based on user input received via user interface 120 (e.g., indicating spatial position information, volume information, and/or other information relating to particular audio sources). Metadata injector 130 may provide such metadata to the audio rendering/authoring 110 for use in reconstituting an audio signal in which the parameters specified via user interface 120 are realized.

Furthermore, other types of contextual information 140 may also be provided to the audio rendering/authoring 110 stage, such as in the form of metadata generated by metadata injector 130, such as room knowledge, speaker placement knowledge, listener location, external inputs from sensors (e.g., cameras, light detection and ranging (LIDAR), radar, proximity sensors, gyroscopes, accelerometers, etc.), weather information, geolocation, emotional state of a user, content analysis data, and/or the like. For example, such contextual information 140 may be gathered from one or more sensors and/or other sources, such as configuration information (e.g., provided by a user) and/or system intelligence modules. In the context of playing audio in a vehicle audio system, other contextual data may be used to generate metadata that is provided to the audio rendering/authoring 110 stage, such as road noise, traffic conditions, passenger locations, and/or the like. Such contextual information may be input by a user and/or automatically detected, such as via one or more microphones, cameras, satellite data, and/or other sensors and/or sources.

Audio rendering/authoring 110 may involve mixing and/or processing portions of audio signals corresponding to separate audio sources (e.g., based on user input or otherwise, such as indicated in metadata from metadata injector 130) in order to produce an overall audio signal that includes all of the portions and, in some embodiments, reflects relevant inputs and/or configurations. For example, if a user changes a spatial location of one of the audio sources (e.g., via user interface 120), then audio rendering/authoring 110 may involve spatial processing of multiple portions of an audio signal in order to position particular audio sources within a virtual sound field according to the specified configuration. Other data, such as such as room knowledge, speaker placement knowledge, listener location, external inputs from sensors, weather information, geolocation, emotional state of a user, content analysis data, and/or the like may also be used during audio rendering/authoring 110 in order to produce the overall audio signal in such a manner that the audio sources are audibly perceived in the manner indicated in the specified configuration.

In some embodiments audio rendering/authoring 110 is performed at one or more speakers 112 on which audio is played (e.g., in embodiments involving speakers with processing capabilities), while in other embodiments audio rendering/authoring 110 is performed at one or more computing devices connected to one or more speakers 112 (e.g., prior to transmitting audio data to the one or more speakers 112). In some embodiments, rendering/authoring 110 (and/or other functionality described herein) is performed in the cloud.

Results of audio rendering/authoring 110 may be played via one or more speakers 112. For example, speaker(s) 112 may be connected to one another (and a computing device at which audio processing may be performed) via a network and/or via one or more other connections over which data may be transmitted.

In one embodiment, speakers 112 may be associated with a vehicle audio system, such as being speakers in the cabin of a car or other vehicle. In such an embodiment, contextual information related to the automotive context (road noise, traffic conditions, passenger locations, and/or the like) may be used at the audio rendering/authoring 110 stage in conjunction with other information such as spatial position information, volume information, and/or other information relating to particular audio sources, as appropriate, to produce results tailored to the particular context. For example, spatial position information may be used in conjunction with a passenger location (e.g., if the driver or another passenger is the point of reference) to create an audio output in which a particular audio source is perceived by a particular passenger as being in a particular spatial position. In another example, volume and/or other parameters of one or more audio sources may be dynamically adapted based on environmental conditions such as road noise or traffic, such as to create a consistent audibly perceived sound for one or more particular listeners.

In certain embodiments, techniques described herein may be used to silence or adjust parameters of particular audio sources within an overall audio signal. For example, if audio component extraction using machine learning 108 results in extracting a "vocals" audio source separate from one or more instrumental audio sources, these sources may be independently manipulated at the audio rendering/authoring 110 stage, such as based on user input. In one example, a user may enable a karaoke mode, in which a vocals audio source is silenced while one or more instrumental audio sources continue to be played, and this may be realized by removing the vocals audio source or otherwise turning the volume of the vocals audio source to zero at the audio rendering/authoring 110 stage.

In some embodiments audio pre-processing 106, audio component extraction using machine learning 108, and audio rendering/authoring 110 are performed on an ongoing basis, such as in real-time or near real-time, such as while playing audio content 104. Consecutive snippets of audio content 104 may be processed in succession through pipeline 100 so that a user is enabled to provide dynamic input with respect to particular audio sources, such as changing spatial positions, volume levels, and/or other aspects of particular audio sources as audio content 104 is being played.

**FIG. 2** illustrates example configurations 210, 220, and 230 related to dynamic audio objectification and spatialization, according to one embodiment.

Configuration 210 illustrates two speakers 212 and 214 configured to play audio content, such as an original audio production 213. Original audio production 213 may include sounds of a plurality of instruments mixed together into one or more speaker signals (e.g., in the case of a stereo recording, there may be two speaker signals, one for a right speaker and one for a left speaker). The plurality of instruments may include a keyboard 215, drums 216, vocals 217, and a guitar 218. For example, original audio production 213 may be a non-object-based audio signal, and each speaker signal may include a mix of multiple instruments.

With conventional techniques, original audio production 213 would not enable manipulation of individual instruments, such as changing audibly perceived spatial positions or volumes of particular instruments. Thus, with existing techniques, original audio production 213 would be delivered in its original form via static speaker signals to speakers 212 and 214, without allowing any changes to individual instruments within the audio content.

Configuration 220 illustrates the use of a neural network 224 to separate an audio recording 222 into a plurality of independent portions 227, 228, 225, and 226 corresponding to separate instruments within recording 222. For example, recording 222 may be a channel-based audio signal (e.g., such as original audio production 213) that does not natively include separate objects or components corresponding to individual instruments. Neural network 224 may represent one or more machine learning models described above with respect to **FIG. 1****.** For example, one or more such machine learning models may be trained (e.g., based on training data including labeled short audio snippets, such as one hundred milliseconds or less in length) to extract individual audio sources from an input audio signal.

Thus, when recording 222 is provided as input data to neural network 224 (e.g., which may represent multiple neural networks, such as one for each audio source or instrument), neural network 224 may output portion 227 (corresponding to vocals 217), portion 228 (e.g., corresponding to guitar 218), portion 225 (e.g., corresponding to keyboard 215), and portion 226 (corresponding to drums 216). Portions 227, 228, 225, and 226 may be separate audio streams that can be independently manipulated, such as to change audibly perceived spatial positions of the individual instruments, volume levels of the individual instruments, and/or the like.

Configuration 230 illustrates spatialization and/or other manipulation of objects or stems (e.g., elements of an audio signal) corresponding to separate audio sources such as instruments, which may have been extracted using one or more machine learning models as described above with respect to configuration 220. For example, object 236 corresponds to drums 216 (and portion 226), object 235 corresponds to keyboard 215 (and portion 225), object 238 corresponds to guitar 218 (and portion 228), and object 237 corresponds to vocals 217 (and portion 227).

Objects 236, 235, 238, and 237 are arranged within a virtual sound space 239 according to particular parameters, such as configured spatial positions, volume levels, and/or the like. Virtual sound space 239 may be created using spatial processing techniques based on portions 227, 228, 225, and 226 and metadata indicating configured spatial information (e.g., based on user input) and/or other configuration information, and may be split across a plurality of speaker signals (e.g., a signal for each of speakers 232, 233, and 234). In some embodiments, virtual sound space 239 represents a two-dimensional or three-dimensional virtual space in which audio is perceived. Virtual sound space 239 may be created such that objects 236, 235, 238, and 237 are arranged in such a manner as to realize the configured audibly perceptible spatial position, volume, and/or other attributes of each corresponding instrument. For example, if a listener is facing speakers 232, 233, and 234 in the configuration depicted, virtual sound space 239 may be configured such that the drums 216 are audibly perceived as being spatially located to the left, the vocals 217 are audibly perceived as being located to the right, and the keyboards 215 and guitar 218 are audibly perceived as being located closer to the center than the drums 216 and the vocals 217 (e.g., on either side of center to the left and right, respectively).

It is noted that the configurations, audio source (e.g., instruments), output devices (e.g., speakers), numbers of portions and objects, and/or the like depicted and described with respect to **FIG. 2** are included as examples, and other types of configurations, audio sources, output devices, numbers of portions and objects, and/or the like are possible with techniques described herein. Furthermore, embodiments described herein are not limited to any particular spatial processing techniques, and various methods may be used to convert audio portions into audio signals that realize spatial and other configurations (e.g., to create a virtual sound space such as virtual sound space 239).

**FIG. 3** illustrates an example user interface 300 related to dynamic audio objectification and spatialization, according to an embodiment.

User interface 300 may be associated with a computing application that performs audio processing, editing, and/or playing functionality. For example, the computing application and/or user interface may run on a user device (e.g., desktop computer, laptop computer, tablet, mobile phone, smart television, standalone audio system associated with a user interface, and/or the like) that is connected to one or more speakers, and/or the computing application and/or user interface may run remotely on a separate computing device (e.g., cloud application server) and may be accessed at the user device via a client-side application, such as in a client-server architecture.

User interface 300 displays information related to audio separation, such as the separation of an audio signal into separate portions corresponding to separate audio sources, and providing spatial and other configuration input with respect to the separate portions, as described above with respect to **FIGs. 1** and **2****.** For example, user interface 300 may include audio information 310 indicating details of an audio signal that is currently open and/or being played with the computing application. For example, audio information 310 indicates a length in time of the audio signal and a current time within the audio signal that is currently being played. Additionally, audio information 310 may indicate a song title and/or artist name associated with the audio signal.

User interface 300 further includes user interface controls 302, 304, 306, and 308 that enable a user to configure audibly perceived spatial positions of a plurality of audio sources within the audio signal. For example, user interface control 302 may visually indicate (e.g., via graphics, text, color, and/or otherwise) that it corresponds to a portion of the audio signal that includes keyboard sound, user interface control 304 may visually indicate (e.g., via graphics, text, color, and/or otherwise) that it corresponds to a portion of the audio signal that includes drum sound, user interface control 306 may visually indicate (e.g., via graphics, text, color, and/or otherwise) that it corresponds to a portion of the audio signal that includes guitar sound, and user interface control 308 may visually indicate (e.g., via graphics, text, color, and/or otherwise) that it corresponds to a portion of the audio signal that includes vocal sound. The controls shown in user interface 300 may be based on which audio sources were identified in the audio signal using one or more machine learning models, as described above. In the depicted example, keyboard, drums, guitar, and vocals were identified in the audio signal. In an alternative embodiment, if different audio sources were identified, controls corresponding to those different audio sources may be displayed in user interface 300. For example, in one alternative embodiment, one control corresponding to vocals and another control corresponding to instrumental music may be displayed in user interface 300, rather than displaying a separate control for each individual instrument (e.g., in such an embodiment, the source separation may involve separating vocals from all instrumental music rather than extracting each instrument individually).

A user may be enabled to interact with user interface controls 302, 304, 306, and 308, such as providing drag and drop input, in order to change configured audibly perceived spatial positions of the different audio sources represented by these controls. For example, dragging and dropping user interface control 306 from one position to another within user interface 300 may constitute configuration input that changes an audibly perceived spatial position of the guitar sound within the overall audio being played (e.g., in a relative direction and/or relative distance indicated by the direction and distance of the drag and drop input). As described above with respect to **FIGs. 1** and **2****,** such input may result in the generation of metadata indicating a changed spatial position of a given audio source, and such metadata may be used to produce one or more signals to be played by one or more speakers in order to realize a virtual sound space in which the audio sources are positioned according to the configuration specified via user interface 300.

A user interface control 311 may allow the user to enable a karaoke mode, which may cause the vocals to be muted, enhanced, and/or otherwise modified (e.g., reduced in gain). For example, selecting user interface control 311 may cause the audio portion corresponding to the vocals to be muted or otherwise excluded from the audio signal that is played. While not shown, other user interface controls may be included in user interface 300 to enable the user to change other aspects of the individual audio sources, such as volume, equalization, other effects, and/or the like. In one embodiment, touching, selecting, or hovering over (e.g., with a cursor) one of user interface controls 302, 304, 306, or 308 causes the corresponding audio source to increase in volume in real-time or near real-time as the audio is being played, and deselecting, ending touch input, or moving a cursor away causes the volume of that corresponding audio source to return to its prior level.

User interface control 312 may, when selected, cause the attributes of the different audio sources to be restored to their original or default values.

The dynamic, real-time or near real-time functionality depicted and described with respect to **FIG. 3** may be enabled by the machine learning based source separation techniques described herein (e.g., with respect to **FIGs. 1** and **2**). For example, by training a machine learning model using supervised learning techniques based on labeled short audio snippets (e.g., one hundred milliseconds or less), embodiments described herein enable such a machine learning model to accurately and efficiently extract portions of input audio data that correspond to a particular audio source in real-time or near real-time, and those extracted portions may be independently manipulated based on real-time or near real-time user input, such as via user interface 300.

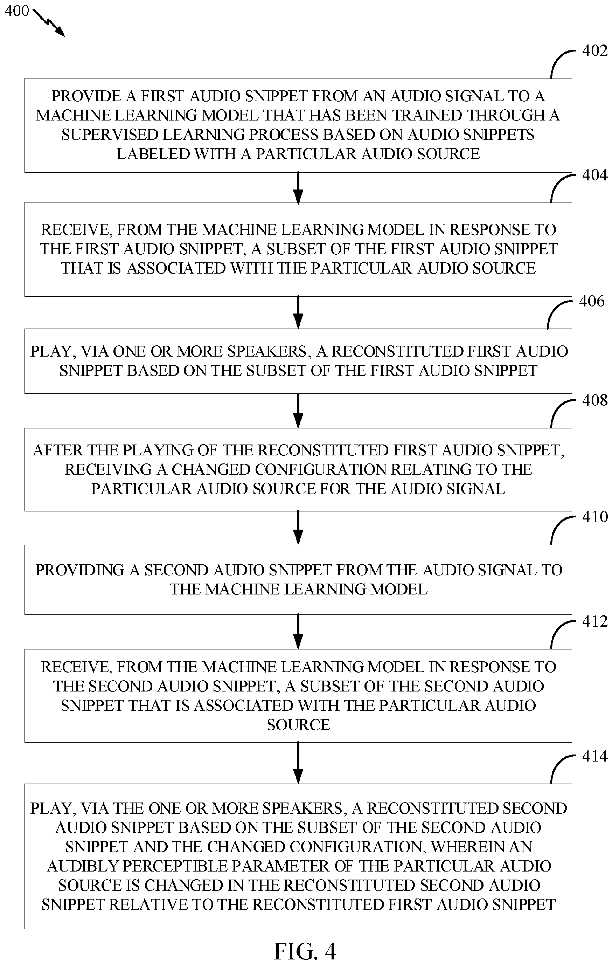

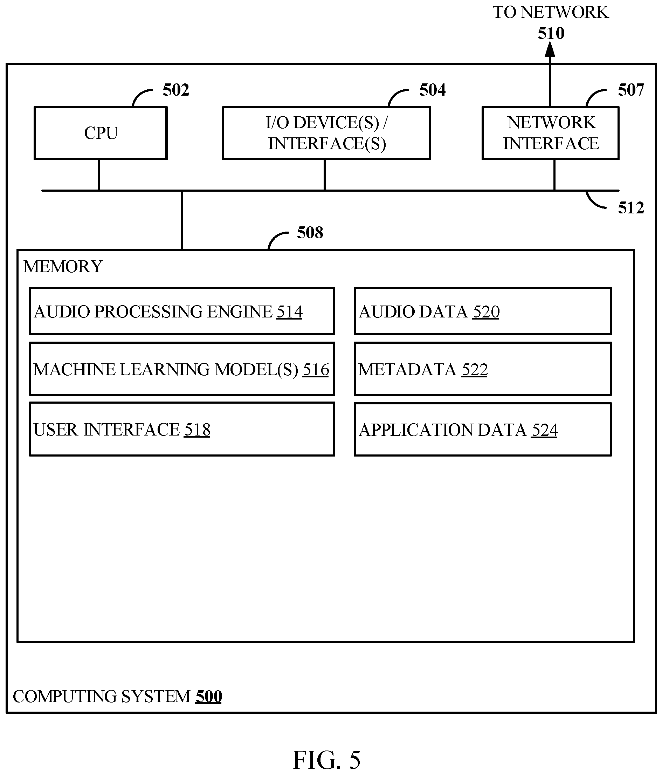

**FIG. 4** is a flowchart 400 of a method for dynamic audio objectification and spatialization, according to one embodiment. For example, the method depicted in flowchart 400 may be performed by a computing application running on a computing device (e.g., computing system 500 of **FIG. 5****,** described below) and/or one or more output devices such as speakers with processing capabilities.

The method may begin at block 402, with providing a first audio snippet from an audio signal to a machine learning model that has been trained through a supervised learning process based on audio snippets labeled with a particular audio source.

The method may continue at block 404, with receiving, from the machine learning model in response to the first audio snippet, a subset of the first audio snippet that is associated with the particular audio source.

The method may continue at block 406, with playing, via one or more speakers, a reconstituted first audio snippet based on the subset of the first audio snippet.

The method may continue at block 408, with, after the playing of the reconstituted first audio snippet, receiving a changed configuration relating to the particular audio source for the audio signal.

The method may continue at block 410, with providing a second audio snippet from the audio signal to the machine learning model.

The method may continue at block 412, with receiving, from the machine learning model in response to the second audio snippet, a subset of the second audio snippet that is associated with the particular audio source.

The method may continue at block 414, with playing, via the one or more speakers, a reconstituted second audio snippet based on the subset of the second audio snippet and the changed configuration, wherein an audibly perceptible parameter (e.g., position, volume, equalization parameter, and/or other type of parameter) of the particular audio source is changed in the reconstituted second audio snippet relative to the reconstituted first audio snippet.

In some embodiments, the changed configuration relating to the particular audio source for the audio signal comprises a changed spatial configuration for the particular audio source for the audio signal, and an audibly perceptible position of the particular audio source is changed in the reconstituted second audio snippet relative to the reconstituted first audio snippet.

In certain embodiments, the changed configuration relating to the particular audio source for the audio signal comprises a changed volume configuration for the particular audio source for the audio signal, and an audibly perceptible volume of the particular audio source is changed in the reconstituted second audio snippet relative to the reconstituted first audio snippet.

In some embodiments, the method further comprises providing the first audio snippet to an additional machine learning model that has been trained based on respective audio snippets labeled with a different audio source and receiving, from the machine learning model in response to the first audio snippet, a respective subset of the first audio snippet that is associated with the different audio source. For example, the playing of the reconstituted first audio snippet may be further based on the respective subset of the first audio snippet. In certain embodiments, the particular audio source is a first musical instrument and the different audio source is a second musical instrument. It is noted that vocals may be considered a musical instrument. In some embodiments, the different audio source is not audibly perceptible in the subset of the first audio snippet, and wherein the particular audio source is not audibly perceptible in the respective subset of the first audio snippet.

In certain embodiments, each of the audio snippets labeled with the particular audio source is less than one hundred milliseconds in length.

In some embodiments, the machine learning model is a deep neural network (DNN).

In certain embodiments, the receiving of the changed configuration relating to the particular audio source for the audio signal is based on input received via a user interface after the playing of the reconstituted first audio snippet.

Some embodiments further comprise providing output to the user interface indicating the particular audio source based on the subset of the audio snippet.

In some embodiments, the reconstituted second audio snippet is generated by the one or more speakers based on metadata relating to the changed configuration.

**FIG. 5** is a block diagram of an example computing system 500 related to dynamic audio objectification and spatialization, according to one embodiment. For example, system 500 may be a computing device connected to one or more output devices, such as one or more speakers.

In certain embodiments, computing system 500 performs techniques described herein related to dynamic audio objectification and spatialization, such as the method depicted and described above with respect to flowchart 400 of **FIG. 4****.**

Computing system 500 includes a central processing unit (CPU) 502 connected to a data bus 512. CPU 502 may be configured to process computer-executable instructions, e.g., stored in memory 508, and to cause computing system 500 to perform methods as described herein, for example with respect to **FIG. 4****.** Though depicted as including one CPU 502, computing system 500 may alternatively have a single processor or a plurality of processors.

Computing system 500 further includes input/output device(s) and interface(s) 504, which allows computing system 500 to interface with input/output devices, such as, for example, keyboards, displays, mouse devices, pen input, speakers, and other devices that allow for interaction with computing system 500. Note that while not depicted with independent external I/O devices, computing system 500 may connect with external I/O devices through physical and wireless connections (e.g., an external display device, external speakers, and/or the like).

Computing system 500 further includes network interface 507, which provides computing system 500 with access to external networks, such as network 510 (e.g., the Internet, a local area network, or another type of network over which data may be transmitted), and thereby external computing devices.

Computing system 500 further includes memory 508, which may be representative of a random access memory or the like. In some embodiments, the memory 508 may include a disk drive, solid state drive, or a collection of storage devices distributed across multiple storage systems. Although shown as a single unit, the memory 508 may be a combination of fixed and/or removable storage devices, such as fixed disc drives, removable memory cards or optical storage, network attached storage (NAS), or a storage area-network (SAN).

In this example, memory 508 includes audio processing engine 514, which may perform certain aspects of operations described above with respect **FIG. 1-4****,** such as operations 400 of **FIG. 4** and/or audio pre-processing 106, audio component extraction using machine learning 108, and/or audio rendering/authoring 110 of **FIG. 1****.** Memory 508 further includes one or more machine learning models 516, which may correspond to one or more machine learning models used at audio component extraction using machine learning 108 of **FIG. 1** and/or one or more machine learning models represented by neural network 224 of **FIG. 2****.** Memory 508 further includes a user interface 518, which may correspond to user interface 300 of **FIG. 3****.**

Additionally, memory 508 includes audio data 520, which may include, for example, audio content 104 of **FIG. 1****,** original audio production 213, recording 222, portions 227, 228, 225, and 226, objects 236, 235, 238, and 237, and/or virtual sound space 239 of **FIG. 2****.** Memory 508 further includes metadata 522, which may correspond to metadata generated by metadata injector 130 of **FIG. 1** and/or metadata described above with respect to configuration 230 of **FIG. 2****.** Memory 508 further includes application data 524, which may include other data related to a computing application that performs audio processing and/or playing functionality, such as configuration information, system data, user data, and/or the like.

Note that while shown as a single memory 508 in **FIG. 5** for simplicity, the aspects stored in memory 508 may be stored in different physical memories, but all accessible to CPU 502 via data connections, such as bus 512.

While not depicted in **FIG. 5****,** other aspects may be included in memory 508.

### Example Clauses

Implementation examples are described in the following numbered clauses:
Clause 1: A method performed by a computing device, comprising: providing a first audio snippet from an audio signal to a machine learning model that has been trained through a supervised learning process based on audio snippets labeled with a particular audio source; receiving, from the machine learning model in response to the first audio snippet, a subset of the first audio snippet that is associated with the particular audio source; playing, via one or more speakers, a reconstituted first audio snippet based on the subset of the first audio snippet; after the playing of the reconstituted first audio snippet, receiving a changed configuration relating to the particular audio source for the audio signal; providing a second audio snippet from the audio signal to the machine learning model; receiving, from the machine learning model in response to the second audio snippet, a subset of the second audio snippet that is associated with the particular audio source; and playing, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.
Clause 2: The computer-implemented method of Clause 1, further comprising: providing the first audio snippet to an additional machine learning model that has been trained based on respective audio snippets labeled with a different audio source; and receiving, from the machine learning model in response to the first audio snippet, a respective subset of the first audio snippet that is associated with the different audio source, wherein the playing of the reconstituted first audio snippet is further based on the respective subset of the first audio snippet.
Clause 3: The computer-implemented method of Clause 2, wherein the particular audio source is a first musical instrument and the different audio source is a second musical instrument.
Clause 4: The computer-implemented method of any one of Clause 2-3, wherein the different audio source is not audibly perceptible in the subset of the first audio snippet, and wherein the particular audio source is not audibly perceptible in the respective subset of the first audio snippet.
Clause 5: The computer-implemented method of any one of Clause 1-4, wherein each of the audio snippets labeled with the particular audio source is less than one hundred milliseconds in length.
Clause 6: The computer-implemented method of any one of Clause 1-5, wherein the machine learning model is a deep neural network (DNN).
Clause 7: The computer-implemented method of any one of Clause 1-6, wherein the receiving of the changed configuration relating to the particular audio source for the audio signal is based on input received via a user interface after the playing of the reconstituted first audio snippet.
Clause 8: The computer-implemented method of Clause 7, further comprising providing output to the user interface indicating the particular audio source based on the subset of the audio snippet.
Clause 9: The computer-implemented method of any one of Clause 1-8, wherein the reconstituted second audio snippet is generated by the one or more speakers based on metadata relating to the changed configuration.
Clause 10: The computer-implemented method of any one of Clause 1-9, wherein the changed configuration relating to the particular audio source for the audio signal comprises a changed spatial configuration for the particular audio source for the audio signal, and wherein an audibly perceptible position of the particular audio source is changed in the reconstituted second audio snippet relative to the reconstituted first audio snippet.
Clause 11: The computer-implemented method of any one of Clause 1-10, wherein the changed configuration relating to the particular audio source for the audio signal comprises a changed volume configuration for the particular audio source for the audio signal, and wherein an audibly perceptible volume of the particular audio source is changed in the reconstituted second audio snippet relative to the reconstituted first audio snippet.
Clause 12: A system, comprising: one or more processors; and a memory storing instructions that, when executed by the one or more processors, cause the system to: provide a first audio snippet from an audio signal to a machine learning model that has been trained through a supervised learning process based on audio snippets labeled with a particular audio source; receive, from the machine learning model in response to the first audio snippet, a subset of the first audio snippet that is associated with the particular audio source; play, via one or more speakers, a reconstituted first audio snippet based on the subset of the first audio snippet; after the playing of the reconstituted first audio snippet, receive a changed configuration relating to the particular audio source for the audio signal; provide a second audio snippet from the audio signal to the machine learning model; receive, from the machine learning model in response to the second audio snippet, a subset of the second audio snippet that is associated with the particular audio source; and play, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.
Clause 13: The system of Clause 12, wherein the instructions, when executed by the one or more processors, further cause the system to: provide the first audio snippet to an additional machine learning model that has been trained based on respective audio snippets labeled with a different audio source; and receive, from the machine learning model in response to the first audio snippet, a respective subset of the first audio snippet that is associated with the different audio source, wherein the playing of the reconstituted first audio snippet is further based on the respective subset of the first audio snippet.
Clause 14: The system of Clause 13, wherein the particular audio source is a first musical instrument and the different audio source is a second musical instrument.
Clause 15: The system of any one of Clause 13-14, wherein the different audio source is not audibly perceptible in the subset of the first audio snippet, and wherein the particular audio source is not audibly perceptible in the respective subset of the first audio snippet.
Clause 16: The system of any one of Clause 12-15, wherein each of the audio snippets labeled with the particular audio source is less than one hundred milliseconds in length.
Clause 17: The system of any one of Clause 12-16, wherein the machine learning model is a deep neural network (DNN).
Clause 18: The system of any one of Clause 12-17, wherein the receiving of the changed configuration relating to the particular audio source for the audio signal is based on input received via a user interface after the playing of the reconstituted first audio snippet.
Clause 19: The system of Clause 18, wherein the instructions, when executed by the one or more processors, further cause the system to provide output to the user interface indicating the particular audio source based on the subset of the audio snippet.
Clause 20: A computer readable medium comprising instructions that, when executed by one or more processors of a computing system, cause the computing system to: provide a first audio snippet from an audio signal to a machine learning model that has been trained through a supervised learning process based on audio snippets labeled with a particular audio source; receive, from the machine learning model in response to the first audio snippet, a subset of the first audio snippet that is associated with the particular audio source; play, via one or more speakers, a reconstituted first audio snippet based on the subset of the first audio snippet; after the playing of the reconstituted first audio snippet, receive a changed configuration relating to the particular audio source for the audio signal; provide a second audio snippet from the audio signal to the machine learning model; receive, from the machine learning model in response to the second audio snippet, a subset of the second audio snippet that is associated with the particular audio source; and play, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

The descriptions of the various embodiments of the presently taught approaches have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

In the preceding, reference is made to embodiments presented in this disclosure. However, the scope of the present disclosure is not limited to specific described embodiments. Instead, any combination of the features and elements described herein, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the aspects, features, embodiments and advantages described herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

Aspects of the presently taught approaches may take the form of an entirely hardware embodiment, an entirely software embodiment (including firmware, resident software, microcode, etc.) or an embodiment combining software and hardware aspects that may all generally be referred to herein as a "circuit," "module" or "system."

The presently taught approaches may be provided by way of a system, a method, and/or a computer program product. The computer program product may include a computer readable medium (or media) comprising computer readable program instructions for causing a processor to carry out aspects of the presently taught approaches.

The computer readable medium can be provided by way of a computer readable storage medium and/or a computer-readable transmission medium. A computer-readable storage medium can be a tangible device that can retain and store instructions for use by an instruction execution device. Such a computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire. On the other hand, a computer-readable transmission medium may include carrier waves, transmission signals or the like (including transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire). A computer-readable transmission medium may convey instructions between components of a single computer system and/or between plural separate computer systems.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the presently taught approaches may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a standalone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the presently taught approaches.

Aspects of the presently taught approaches are described herein with reference to flowchart illustrations and/or block diagrams of methods, apparatus (systems), and computer program products according to embodiments of the presently taught approaches. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the presently taught approaches. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Embodiments of the presently taught approaches may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. Doing so allows a user to access this information from any computing system attached to a network connected to the cloud (e.g., the Internet).

Therefore, from one perspective, there have been described techniques for dynamic audio objectification. Embodiments include providing a first audio snippet from an audio signal to a machine learning model trained based on audio snippets labeled with an audio source and receiving, from the machine learning model, a subset of the first audio snippet that is associated with the audio source. Embodiments include, after playing the reconstituted first audio snippet, receiving a changed configuration relating to the audio source. Embodiments include providing a second audio snippet from the audio signal to the machine learning model and receiving, from the machine learning model, a subset of the second audio snippet that is associated with the audio source. Embodiments include playing a reconstituted second audio snippet based on the subset of the second audio snippet and the changed configuration, wherein an audibly perceptible parameter of the audio source is changed in the reconstituted second audio snippet.

Further examples are set out in the following numbered clauses.

Clause 1. A method performed by a computing device, comprising: providing a first audio snippet from an audio signal to a machine learning model that has been trained through a supervised learning process based on audio snippets labeled with a particular audio source; receiving, from the machine learning model in response to the first audio snippet, a subset of the first audio snippet that is associated with the particular audio source; playing, via one or more speakers, a reconstituted first audio snippet based on the subset of the first audio snippet; after the playing of the reconstituted first audio snippet, receiving a changed configuration relating to the particular audio source for the audio signal; providing a second audio snippet from the audio signal to the machine learning model; receiving, from the machine learning model in response to the second audio snippet, a subset of the second audio snippet that is associated with the particular audio source; and playing, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

Clause 2. The computer-implemented method of clause 1, further comprising: providing the first audio snippet to an additional machine learning model that has been trained based on respective audio snippets labeled with a different audio source; and receiving, from the machine learning model in response to the first audio snippet, a respective subset of the first audio snippet that is associated with the different audio source, wherein the playing of the reconstituted first audio snippet is further based on the respective subset of the first audio snippet.

Clause 3. The computer-implemented method of clause 2, wherein the particular audio source is a first musical instrument and the different audio source is a second musical instrument.

Clause 4. The computer-implemented method of clause 2 or 3, wherein the different audio source is not audibly perceptible in the subset of the first audio snippet, and wherein the particular audio source is not audibly perceptible in the respective subset of the first audio snippet.

Clause 5. The computer-implemented method of any preceding clause, wherein each of the audio snippets labeled with the particular audio source is less than one hundred milliseconds in length.

Clause 6. The computer-implemented method of any preceding clause, wherein the machine learning model is a deep neural network (DNN).

Clause 7. The computer-implemented method of any preceding clause, wherein the receiving of the changed configuration relating to the particular audio source for the audio signal is based on input received via a user interface after the playing of the reconstituted first audio snippet.

Clause 8. The computer-implemented method of clause 7, further comprising providing output to the user interface indicating the particular audio source based on the subset of the audio snippet.

Clause 9. The computer-implemented method of any preceding clause, wherein the reconstituted second audio snippet is generated by the one or more speakers based on metadata relating to the changed configuration.

Clause 10. The computer-implemented method of any preceding clause, wherein the changed configuration relating to the particular audio source for the audio signal comprises a changed spatial configuration for the particular audio source for the audio signal, and wherein an audibly perceptible position of the particular audio source is changed in the reconstituted second audio snippet relative to the reconstituted first audio snippet.

Clause 11. The computer-implemented method of any preceding clause, wherein the changed configuration relating to the particular audio source for the audio signal comprises a changed volume configuration for the particular audio source for the audio signal, and wherein an audibly perceptible volume of the particular audio source is changed in the reconstituted second audio snippet relative to the reconstituted first audio snippet.

Clause 12. A system, comprising: one or more processors; and a memory storing instructions that, when executed by the one or more processors, cause the system to: provide a first audio snippet from an audio signal to a machine learning model that has been trained through a supervised learning process based on audio snippets labeled with a particular audio source; receive, from the machine learning model in response to the first audio snippet, a subset of the first audio snippet that is associated with the particular audio source; play, via one or more speakers, a reconstituted first audio snippet based on the subset of the first audio snippet; after the playing of the reconstituted first audio snippet, receive a changed configuration relating to the particular audio source for the audio signal; provide a second audio snippet from the audio signal to the machine learning model; receive, from the machine learning model in response to the second audio snippet, a subset of the second audio snippet that is associated with the particular audio source; and play, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

Clause 13. The system of clause 12, wherein the instructions, when executed by the one or more processors, further cause the system to: provide the first audio snippet to an additional machine learning model that has been trained based on respective audio snippets labeled with a different audio source; and receive, from the machine learning model in response to the first audio snippet, a respective subset of the first audio snippet that is associated with the different audio source, wherein the playing of the reconstituted first audio snippet is further based on the respective subset of the first audio snippet.

Clause 14. The system of clause 13, wherein the particular audio source is a first musical instrument and the different audio source is a second musical instrument.

Clause 15. The system of clause 13 or 14, wherein the different audio source is not audibly perceptible in the subset of the first audio snippet, and wherein the particular audio source is not audibly perceptible in the respective subset of the first audio snippet.

Clause 16. The system of any of clauses 12 to 15, wherein each of the audio snippets labeled with the particular audio source is less than one hundred milliseconds in length.

Clause 17. The system of any of clauses 12 to 16, wherein the machine learning model is a deep neural network (DNN).

Clause 18. The system of any of clauses 12 to 17, wherein the receiving of the changed configuration relating to the particular audio source for the audio signal is based on input received via a user interface after the playing of the reconstituted first audio snippet.

Clause 19. The system of clause 18, wherein the instructions, when executed by the one or more processors, further cause the system to provide output to the user interface indicating the particular audio source based on the subset of the audio snippet.

Clause 20. A computer readable medium comprising instructions that, when executed by one or more processors of a computing system, cause the computing system to: provide a first audio snippet from an audio signal to a machine learning model that has been trained through a supervised learning process based on audio snippets labeled with a particular audio source; receive, from the machine learning model in response to the first audio snippet, a subset of the first audio snippet that is associated with the particular audio source; play, via one or more speakers, a reconstituted first audio snippet based on the subset of the first audio snippet; after the playing of the reconstituted first audio snippet, receive a changed configuration relating to the particular audio source for the audio signal; provide a second audio snippet from the audio signal to the machine learning model; receive, from the machine learning model in response to the second audio snippet, a subset of the second audio snippet that is associated with the particular audio source; and play, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

While the foregoing is directed to embodiments of the presently taught approaches, other and further embodiments of the presently taught approaches may be devised without departing from the basic scope thereof, and the scope of protection is set out by the claims that follow.

## Claims

1. A method performed by a computing device, comprising:
providing a first audio snippet from an audio signal to a machine learning model that has been trained through a supervised learning process based on audio snippets labeled with a particular audio source;
receiving, from the machine learning model in response to the first audio snippet, a subset of the first audio snippet that is associated with the particular audio source;
playing, via one or more speakers, a reconstituted first audio snippet based on the subset of the first audio snippet;
after the playing of the reconstituted first audio snippet, receiving a changed configuration relating to the particular audio source for the audio signal;
providing a second audio snippet from the audio signal to the machine learning model;
receiving, from the machine learning model in response to the second audio snippet, a subset of the second audio snippet that is associated with the particular audio source; and
playing, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

2. The computer-implemented method of claim 1, further comprising:
providing the first audio snippet to an additional machine learning model that has been trained based on respective audio snippets labeled with a different audio source; and
receiving, from the machine learning model in response to the first audio snippet, a respective subset of the first audio snippet that is associated with the different audio source, wherein the playing of the reconstituted first audio snippet is further based on the respective subset of the first audio snippet.

3. The computer-implemented method of claim 2, wherein the particular audio source is a first musical instrument and the different audio source is a second musical instrument.

4. The computer-implemented method of claim 2 or 3, wherein the different audio source is not audibly perceptible in the subset of the first audio snippet, and wherein the particular audio source is not audibly perceptible in the respective subset of the first audio snippet.

5. The computer-implemented method of any preceding claim, wherein each of the audio snippets labeled with the particular audio source is less than one hundred milliseconds in length.

6. The computer-implemented method of any preceding claim, wherein the machine learning model is a deep neural network (DNN).

7. The computer-implemented method of any preceding claim, wherein the receiving of the changed configuration relating to the particular audio source for the audio signal is based on input received via a user interface after the playing of the reconstituted first audio snippet.

8. The computer-implemented method of claim 7, further comprising providing output to the user interface indicating the particular audio source based on the subset of the audio snippet.

9. The computer-implemented method of any preceding claim, wherein the reconstituted second audio snippet is generated by the one or more speakers based on metadata relating to the changed configuration.

10. The computer-implemented method of any preceding claim, wherein the changed configuration relating to the particular audio source for the audio signal comprises a changed spatial configuration for the particular audio source for the audio signal, and wherein an audibly perceptible position of the particular audio source is changed in the reconstituted second audio snippet relative to the reconstituted first audio snippet.

11. The computer-implemented method of any preceding claim, wherein the changed configuration relating to the particular audio source for the audio signal comprises a changed volume configuration for the particular audio source for the audio signal, and wherein an audibly perceptible volume of the particular audio source is changed in the reconstituted second audio snippet relative to the reconstituted first audio snippet.

12. A system, comprising:
one or more processors; and
a memory storing instructions that, when executed by the one or more processors, cause the system to:
provide a first audio snippet from an audio signal to a machine learning model that has been trained through a supervised learning process based on audio snippets labeled with a particular audio source;
receive, from the machine learning model in response to the first audio snippet, a subset of the first audio snippet that is associated with the particular audio source;
play, via one or more speakers, a reconstituted first audio snippet based on the subset of the first audio snippet;
after the playing of the reconstituted first audio snippet, receive a changed configuration relating to the particular audio source for the audio signal;
provide a second audio snippet from the audio signal to the machine learning model;
receive, from the machine learning model in response to the second audio snippet, a subset of the second audio snippet that is associated with the particular audio source; and
play, via the one or more speakers, a reconstituted second audio snippet based on the subset of the second audio snippet and the changed configuration, wherein an audibly perceptible parameter of the particular audio source is changed in the reconstituted second audio snippet relative to the reconstituted first audio snippet.

13. The system of claim 12, wherein the instructions, when executed by the one or more processors, further cause the system to provide functionality corresponding to the method of any of claims 2 to 11.

14. A computer readable medium comprising instructions that, when executed by one or more processors of a computing system, cause the computing system to become configured to perform the method of any of claims 1 to 12.
